# EUROPEAN PATENT APPLICATION

(11) **EP 4 455 476 A1**
(43) Date of publication of application: **30.10.2024**
(21) Application number: 22910640.6
(22) Date of filing: 09.11.2022
(51) Int. Cl.: F02M 55/00, F02M 55/02, F02M 21/02, F02M 37/00

(54) **SUPPLY PIPE FOR VEHICULAR GASEOUS FUEL**

(30) Priority: 20.12.2021 JP 2021206494
(71) Applicant: Usui Co., Ltd., Sunto-gun, Shizuoka 411-8610 (JP)
(72) Inventor: KATSUMATA, Hiroyuki, Sunto-gun, Shizuoka 411-8610 (JP); KANDA, Takanori, Sunto-gun, Shizuoka 411-8610 (JP)
(74) Representative: Wagner, Jürgen
(86) International application number: PCT/JP2022/041657
(87) International publication number: WO 2023/119921

(57) **Abstract**

To provide a supply pipe for vehicular gaseous fuel capable of suppressing an increase in cost and weight and increasing the degree of freedom in layout when suppressing pressure pulsation of the gaseous fuel, a supply pipe (10) for vehicular gaseous fuel includes a main pipe (12) through which gaseous fuel supplied to an engine (E) mounted on a vehicle flows, a sub tank (13) separated from the main pipe (12); and a coupling member (14) that couples the main pipe (12) with the sub tank (13), wherein the sub tank (13) is coupled with the main pipe (12) via the coupling member (14).

## Description

### TECHNICAL FIELD

The present invention relates to a supply pipe for vehicular gaseous fuel.

### BACKGROUND ART

In the related art, there has been known a fuel supply pipe in which a pulsation suppression mechanism for suppressing pressure pulsation of fuel is provided in a fuel supply pipe through which fuel supplied to an internal combustion engine mounted on a vehicle flows (refer to, for example, Patent Literatures 1 to 3).

### CITATION LIST

### Patent Literature

Patent Literature 1: JP 9-60786 A
Patent Literature 2: JP 2004-232472 A
Patent Literature 3: JP 2018-31271 A

### SUMMARY

### Technical Problem

As disclosed in Patent Literature 1 and Patent Literature 2, in a pulsation suppression mechanism provided in a fuel supply pipe in the related art, an elastic member such as rubber or a diaphragm is provided in a chamber connected to the fuel supply pipe, and the elastic member or the diaphragm is deformed to reduce pressure pulsation of the fuel. However, when the fuel to be supplied to the internal combustion engine is gaseous fuel, the pressure fluctuation in the fuel supply pipe due to pulsation is smaller than that when the liquid fuel is supplied. Therefore, in the fuel supply pipe for supplying the gaseous fuel to the internal combustion engine, it is not necessary to reduce the pressure pulsation using the elastic member or the diaphragm. That is, when a pulsation suppression mechanism for reducing pressure pulsation using an elastic member or a diaphragm is provided in a supply pipe for gaseous fuel, there arises a problem that cost and vehicle weight are unnecessarily increased.

In addition, as disclosed in Patent Literature 3, when the pulsation suppression mechanism is configured by a space portion provided in the fuel supply pipe, the fuel supply pipe needs to be enlarged by the space portion. However, various components and pipes are complicatedly arranged around the internal combustion engine, and there is little space to spare. Therefore, the degree of freedom in the layout of the fuel supply pipe is low, and it is not easy to mount a large fuel supply pipe having a space portion on a vehicle.

The present invention has been made in view of the above problems, and it is an object of the present invention to provide a supply pipe for vehicular gaseous fuel capable of suppressing an increase in cost and weight and increasing the degree of freedom in layout when suppressing pressure pulsation of the gaseous fuel.

### Solution to Problem

In order to achieve the above object, the present invention includes a main pipe through which gaseous fuel supplied to an internal combustion engine mounted on a vehicle flows; a sub tank separated from the main pipe; and a coupling member that couples the main pipe with the sub tank. The sub tank is coupled with the main pipe via the coupling member.

### Advantageous Effects

Therefore, in the supply pipe for vehicular gaseous fuel of the present invention, when the pressure pulsation of the gaseous fuel is suppressed, an increase in cost and weight can be suppressed, and the degree of freedom in layout can be increased.

### BRIEF DESCRIPTION OF DRAWINGS

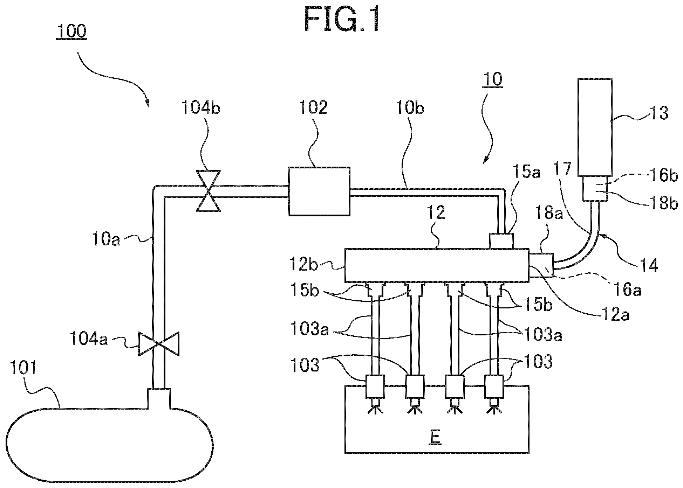

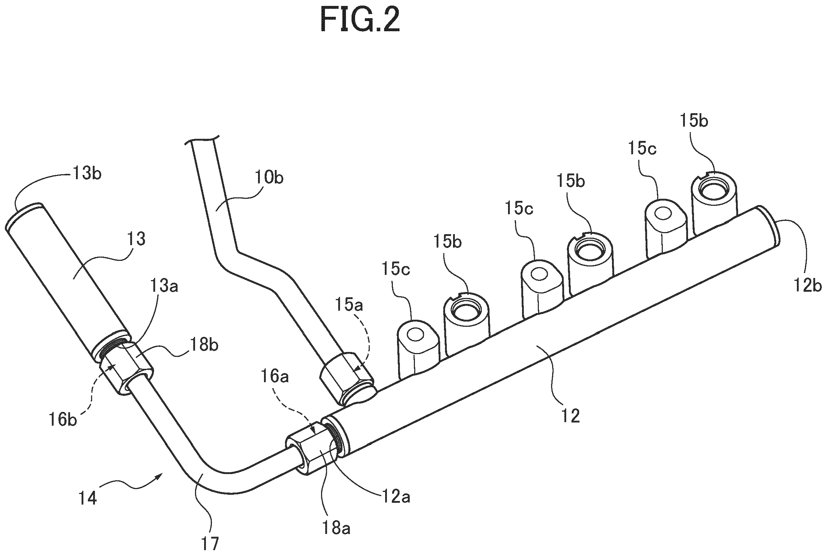

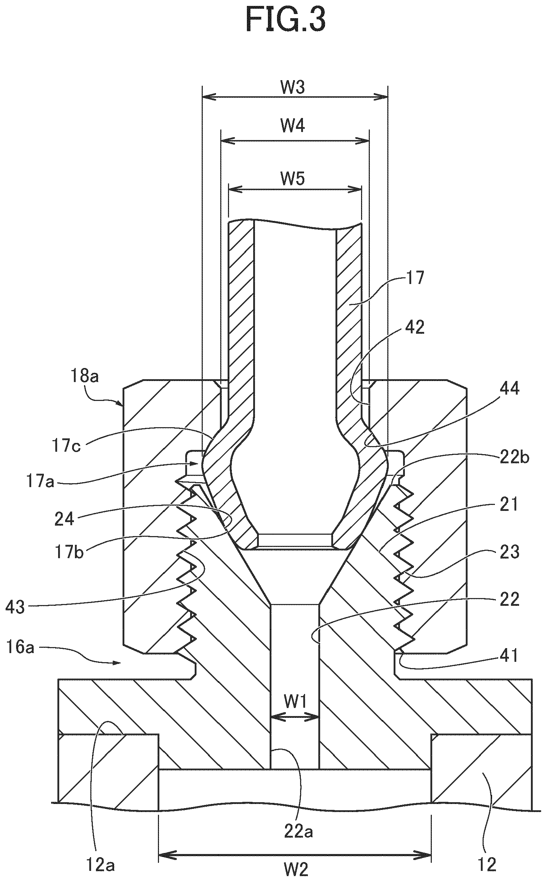

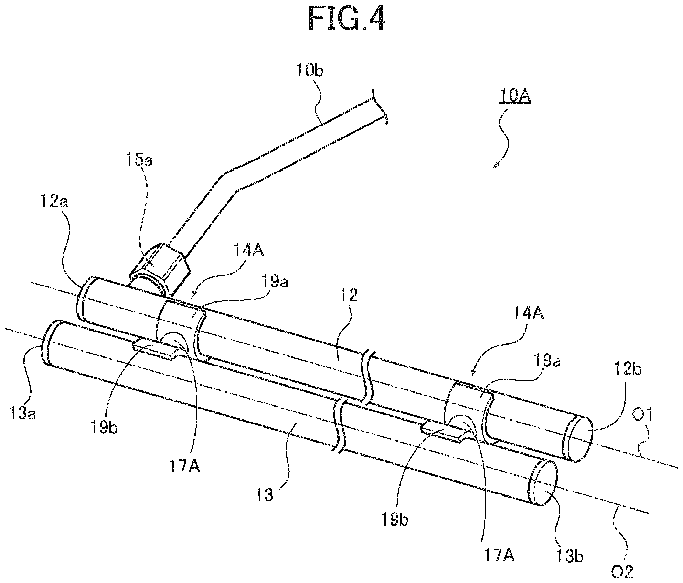

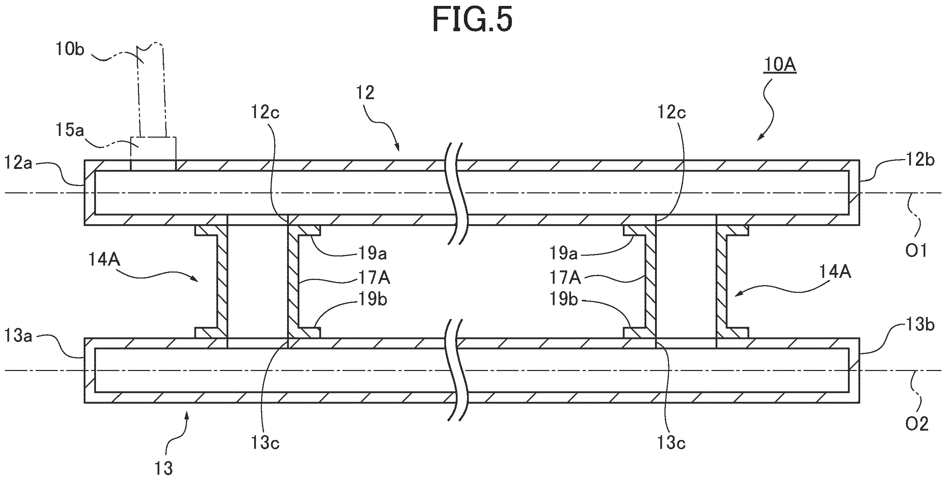

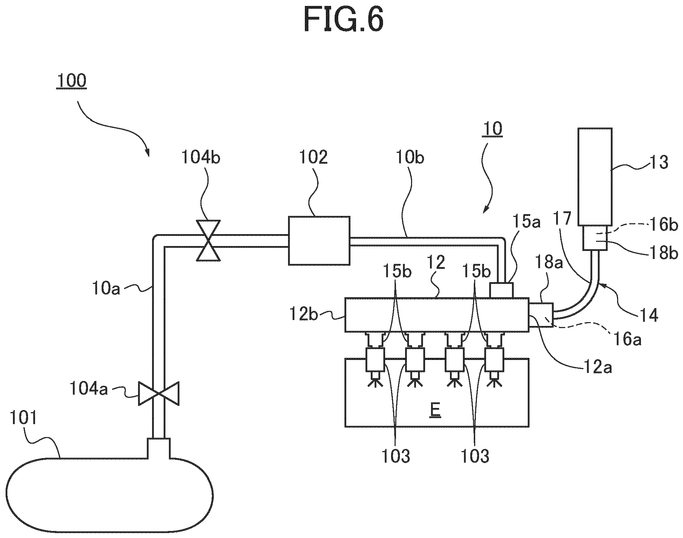

Fig. 1 illustrates a schematic configuration diagram illustrating a fuel supply system of an internal combustion engine to which a supply pipe for vehicular gaseous fuel of Embodiment 1 is applied. Fig. 2 is a perspective view illustrating a supply pipe for vehicular gaseous fuel according to Embodiment 1. Fig. 3 is an explanatory view illustrating a coupling structure between a first connection portion and a main pipe according to Embodiment 1. Fig. 4 is a perspective view schematically illustrating a supply pipe for vehicular gaseous fuel according to Embodiment 2. Fig. 5 is a cross-sectional view schematically illustrating a supply pipe for vehicular gaseous fuel according to Embodiment 2. Fig. 6 is a schematic configuration diagram illustrating a modification of a fuel supply system of an internal combustion engine to which a supply pipe for vehicular gaseous fuel of the present invention is applied.

### DESCRIPTION OF EMBODIMENTS

Hereinafter, an embodiment for implementing a supply pipe for vehicular gaseous fuel of the present invention will be described based on Embodiment 1 and Embodiment 2 shown in the drawings.

### (Embodiment 1)

A supply pipe (hereinafter, referred to as a "fuel supply pipe 10") for vehicular gaseous fuel of Embodiment 1 is applied to, for example, a fuel supply system 100 that supplies fuel to a direct injection type engine E (internal combustion engine) that directly injects gaseous fuel (hydrogen gas or the like) into a cylinder at high pressure. Here, as illustrated in Fig. 1, the fuel supply system 100 includes a fuel tank 101, a fuel pressure regulator 102, an injector 103, and a fuel supply pipe 10.

The fuel tank 101 is a gas tank that stores gaseous fuel in a high-pressure state. The fuel tank 101 is connected to the fuel pressure regulator 102 via a first supply pipe 10a.

The first supply pipe 10a has one end connected to the fuel tank 101 and the other end connected to the fuel pressure regulator 102, and the gaseous fuel flows from the fuel tank 101 to the fuel pressure regulator 102. That is, the first supply pipe 10a communicates with the fuel tank 101. A first blocking valve 104a and a second blocking valve 104b are provided at an intermediate position of the first supply pipe 10a. The first blocking valve 104a appropriately blocks off the flow of the gaseous fuel discharged from the fuel tank 101. The second blocking valve 104b is disposed between the first blocking valve 104a and the fuel pressure regulator 102, and operates between an open position for allowing the flow of the gaseous fuel in the first supply pipe 10a and a closed position for blocking the flow of the gaseous fuel in the first supply pipe 10a.

The fuel pressure regulator 102 reduces the pressure of the gaseous fuel in the high-pressure state (for example, 70 MPa) stored in the fuel tank 101 to an injection supply pressure (4 to 15 MPa) of the injector 103. The injection supply pressure may be variably controlled by the fuel pressure regulator 102. The fuel pressure regulator 102 is connected to a main pipe 12 via a second supply pipe 10b.

In the second supply pipe 10b, one end is connected to the fuel pressure regulator 102, the other end is connected to the main pipe 12, and the gaseous fuel decompressed by the fuel pressure regulator 102 flows. That is, the second supply pipe 10b communicates with the fuel tank 101.

The injector 103 is provided according to the number of cylinders of an engine E, and is connected to the main pipe 12 via a coupling pipe 103a. Each injector 103 is subjected to opening/closing drive control at an appropriate timing according to the operating state of the engine E, and directly injects gaseous fuel in the main pipe 12 into each cylinder of the engine E.

The fuel supply pipe 10 is a pipe through which the gaseous fuel supplied from the fuel tank 101 to the engine E flows, and includes the first supply pipe 10a, the second supply pipe 10b, the main pipe 12, a sub tank 13, and a coupling member 14.

The main pipe 12 is a straight pipe to which the second supply pipe 10b is coupled and which extends in a direction coaxial with the cylinder arrangement of the engine E (cylinder arrangement direction of the engine E). The main pipe 12 has one end portion 12a opened and the other end portion 12b closed. As illustrated in Fig. 2, the main pipe 12 includes an inlet portion 15a to which the second supply pipe 10b is coupled, an injector attachment portion 15b corresponding to the number of cylinders of the engine E, a plurality of attachment bosses 15c, and a first connection portion 16a.

As illustrated in Fig. 2, the inlet portion 15a and the injector attachment portion 15b are formed on the peripheral surface of the main pipe 12, and are arranged in an axial direction of the main pipe 12. In Embodiment 1, the inlet portion 15a is disposed at a position close to one end portion 12a of the main pipe 12. A first connection portion 16a is formed at one end portion 12a of the main pipe 12, and is disposed at a position not interfering with the inlet portion 15a and the injector attachment portion 15b. Although not illustrated in Fig. 2, a structure for attaching a sensor related to fuel injection control such as a boss for attaching a fuel pressure sensor is disposed on the peripheral surface or the end surface of the main pipe 12.

As illustrated in Fig. 3, the first connection portion 16a includes a boss portion 21, an in-boss flow path 22, a male screw portion 23 formed on an outer peripheral surface of the boss portion 21, and an abutment portion 24 formed in a distal end opening 22b of the in-boss flow path 22.

The boss portion 21 is a metal cylindrical member fixed to the opened one end portion 12a of the main pipe 12 by brazing, welding, screwing, or the like. The in-boss flow path 22 penetrates the boss portion 21 along the axial direction of the main pipe 12. In the in-boss flow path 22, one opening 22a is coupled with the main pipe 12, and the gaseous fuel in the main pipe 12 flows into the in-boss flow path 22 from the one opening 22a. The inside of the distal end opening 22b, which is the other opening of the in-boss flow path 22, has a tapered shape inclined radially outward from the center toward an opening edge. The inside of the distal end opening 22b having a tapered shape serves as the abutment portion 24. An inner diameter W1 of the in-boss flow path 22 is set to be smaller than an inner diameter W2 of the main pipe 12.

The sub tank 13 is a hollow housing, formed in an elongated cylindrical shape, separated from the main pipe 12. The volume of the sub tank 13 is set to a volume required for reducing pulsation of the gaseous fuel. In the sub tank 13, one end 13a (one end portion) in a longitudinal direction is open, and the other end 13b in the longitudinal direction is closed. A second connection portion 16b for connecting the coupling member 14 is provided at one end 13a of the opened sub tank 13. The second connection portion 16b has the same configuration as that of the first connection portion 16a formed in the main pipe 12, and includes a boss portion, an in-boss flow path, a male screw portion, and an abutment portion (not shown). Therefore, a detailed description of the second connection portion 16b will be omitted.

The coupling member 14 includes a metallic coupling pipe 17 whose both ends are open, a first nut 18a that fixes one end of the coupling pipe 17 to the first connection portion 16a, and a second nut 18b that fixes the other end of the coupling pipe 17 to the second connection portion 16b.

The coupling pipe 17 is a metal pipe with both ends opened, and is set to have a smaller diameter than those of the main pipe 12 and the sub tank 13. As illustrated in Fig. 2, an intermediate position of the coupling pipe 17 of Embodiment 1 is bent at a substantially right angle. Both end portions (only one end portion is shown in Fig. 3) of the coupling pipe 17 are each formed with a head portion 17a whose outer peripheral surface is curved in a convex arc shape due to plastic working. The head portion 17a may be formed as a separate component from the coupling pipe 17 by cutting or the like. In this case, the head portion 17a is fixed to the end portion of the coupling pipe 17 by brazing or welding.

The head portion 17a is inserted into the distal end opening 22b of the in-boss flow path 22, and a distal end portion 17b is in contact with the abutment portion 24 in an airtight state. The coupling pipe 17 is fixed to the first connection portion 16a or the second connection portion 16b via a screw structure (fastening structure using the male screw portion 23 and a female screw portion 43 to be described later) in a state where the head portions 17a formed at both end portions abut on the first connection portion 16a or the second connection portion 16b. As a result, an annular seal surface surrounding the periphery of the opening of the coupling pipe 17 is formed, and leakage of gaseous fuel is prevented.

The first nut 18a is a bag-shaped nut having a width across flats (generally hexagonal) in an outer shape, and has an opening portion 41 into which the boss portion 21 of the first connection portion 16a can be inserted at one end, and a through hole 42 through which the coupling pipe 17 passes is formed at the other end. The female screw portion 43 screwed to the male screw portion 23 formed on an outer peripheral surface of the boss portion 21 is formed on an inner peripheral surface of the first nut 18a, and has a hollow cylindrical shape into which the first connection portion 16a can be inserted. Further, a pressing portion 44 is formed around the through hole 42.

Here, an inner diameter W4 of the through hole 42 is set to be smaller than a maximum outer diameter W3 of the head portion 17a, and larger than an outer diameter W5 of the coupling pipe 17. Accordingly, the pressing portion 44 formed inside the through hole 42 faces a bulge back surface 17c of the head portion 17a. When the female screw portion 43 is screwed into the male screw portion 23, the first nut 18a approaches the main pipe 12, and the pressing portion 44 presses the head portion 17a toward the abutment portion 24. As a result, the end portion of the coupling pipe 17 (the distal end portion 17b of the head portion 17a) abuts against the first connection portion 16a, and is fixed via a screw structure (fastening structure by the male screw portion 23 and the female screw portion 43 to be described later).

The configuration of the other end portion of the coupling pipe 17 and the second nut 18b is similar to the configuration of one end portion of the coupling pipe 17 and the first nut 18a, and a detailed description thereof will be omitted.

Hereinafter, the operation in the fuel supply pipe 10 (supply pipe for vehicular gaseous fuel) of Embodiment 1 will be described.

The fuel supply pipe 10 of Embodiment 1 includes a main pipe 12 through which gaseous fuel supplied to the engine E mounted on a vehicle flows, a sub tank 13 separated from the main pipe 12, and a coupling member 14 that connects the main pipe 12 and the sub tank 13. The sub tank 13 is coupled with the main pipe 12 via the coupling member 14. As described above, by coupling the sub tank 13 with the main pipe 12, the fuel supply pipe 10 of Embodiment 1 can increase the volume of the portion through which the gaseous fuel flows to the injector 103 on the downstream side of the second supply pipe 10b as compared with the case where the main pipe 12 is used alone, and can suppress the pressure pulsation of the gaseous fuel supplied to the injector 103. That is, the fuel supply pipe 10 of Embodiment 1 can obtain substantially the same effect as that of increasing the volume of the main pipe 12.

That is, the fuel supply pipe 10 of Embodiment 1 can suppress the pressure pulsation of the gaseous fuel flowing through the main pipe 12 by substantially increasing the volume of the main pipe 12 without using an elastic member or a diaphragm. Therefore, the fuel supply pipe 10 of Embodiment 1 can suppress an increase in cost and weight when suppressing the pressure pulsation of the gaseous fuel.

The sub tank 13 is separated from the main pipe 12, and is connected to the main pipe 12 via the coupling member 14. Therefore, in the fuel supply pipe 10 of Embodiment 1, the layout of the sub tank 13 is not limited, and the sub tank 13 can be appropriately arranged in a gap generated around the engine E and the main pipe 12. As a result, in the fuel supply pipe 10 of Embodiment 1, it is possible to substantially increase the volume of the main pipe 12 by optimally utilizing the peripheral space of the main pipe 12, and to increase the degree of freedom in layout when suppressing the pressure pulsation of the gaseous fuel flowing through the main pipe 12.

Here, as another method of suppressing the pressure pulsation, a case where the volume of the main pipe 12 is increased by increasing the diameter of the main pipe 12 without changing the length of the main pipe is considered. In this case, when the pressure of the gaseous fuel flowing through the main pipe 12 is repeatedly increased and decreased by the fuel injection, the main pipe 12 repeatedly expands and contracts. For this reason, stress concentration occurs at the other end portion 12b of the main pipe 12 and at a joint part of one end portion 12a. As a result, since there is a concern of fatigue fracture, in order to suppress this, it is necessary to increase the wall thickness of the main pipe 12 to suppress the deformation amount of the main pipe 12 and secure the pressure resistance of the main pipe 12. Therefore, the weight of the main pipe 12 increases. In addition, the main pipe 12 having various diameters according to the magnitude of the pressure pulsation to be suppressed is required, which leads to an increase in cost.

On the other hand, in the fuel supply pipe 10 of Embodiment 1, since the sub tank 13 as a separate body is connected to the main pipe 12 to substantially increase the capacity of the main pipe 12, the capacity of the main pipe 12 can be adjusted by changing the capacity (shape) of the sub tank 13. That is, regardless of the magnitude of the pressure pulsation to be suppressed, the main pipe 12 can be made common, and the main pipe 12 itself does not change the pipe diameter and does not need to be thickened. Therefore, an increase in the weight of the main pipe 12 can be suppressed. In general, the sub tank 13 has a simpler shape than the main pipe 12, and can be manufactured at a low cost. Therefore, in the fuel supply pipe 10 of Embodiment 1, it is not necessary to prepare the main pipe 12 having a relatively high cost for each of a large number of diameters, and an increase in a cost can be suppressed.

That is, by preparing a plurality of types of sub tanks 13 and coupling members 14 having different sizes (capacities), shapes, and the like in advance, for example, even for those having different sizes and positions of the space around the main pipe 12 due to a difference in specifications of the engine E and the like, it is possible to obtain substantially the same effect as the effect of increasing the volume of the main pipe 12 by selecting one suitable for the size and position of the space around the main pipe 12 from among the plurality of types of sub tanks 13 and coupling members 14 having different sizes (capacities), shapes, and the like prepared in advance and attaching the selected one to the main pipe 12 without changing the main pipe 12 itself. Therefore, it is possible to easily cope with the specification difference of the engine E.

In addition, in the fuel supply pipe 10 of Embodiment 1, the main pipe 12 includes the inlet portion 15a with which the second supply pipe 10b communicating with the fuel tank 101 that stores gaseous fuel is coupled, and the injector attachment portion 15b to which the injector 103 that injects the gaseous fuel into the engine E is connected. The coupling member 14 is connected to the one end portion 12a of the main pipe 12.

Therefore, the main pipe 12 is a so-called fuel delivery pipe that distributes the gaseous fuel for each cylinder of the engine E. As a result, the fuel supply pipe 10 of Embodiment 1 can substantially increase the capacity of the fuel delivery pipe and suppress the pressure pulsation of the gaseous fuel.

In the fuel supply pipe 10 of Embodiment 1, the sub tank 13 is formed in an elongated cylindrical shape, and the coupling member 14 is coupled with one open end portion 12a of the main pipe 12 and one open end 13a of the sub tank 13. Thus, the main pipe 12 and the sub tank 13 can be connected in series.

Further, in the fuel supply pipe 10 of Embodiment 1, the coupling member 14 includes the metallic coupling pipe 17 whose both ends are opened, the first nut 18a coupled with the main pipe 12 by fixing one end of the coupling pipe 17 to the first connection portion 16a, and the second nut 18b coupled with the sub tank 13 by fixing the other end of the coupling pipe 17 to the second connection portion 16b. One end portion of the coupling pipe 17 abuts on an abutment portion 24 formed on the boss portion 21 fixed to the main pipe 12, and is coupled with the main pipe 12 via a screw structure (a fastening structure by the male screw portion 23 and the female screw portion 43). In addition, the other end portion (not shown) of the coupling pipe 17 abuts against an abutment portion (not shown) formed in a boss portion (not shown) fixed to the sub tank 13, and is coupled to the sub tank 13 via the screw structure (not shown).

As a result, in the fuel supply pipe 10 of Embodiment 1, the sealing performance at the end portion of the coupling pipe 17 can be adjusted by adjusting the screwing amount of the first nut 18a or the second nut 18b at both ends of the coupling pipe 17, or the sealing performance can be recovered by tightening the first nut 18a or the second nut 18b again. That is, the fuel supply pipe 10 of Embodiment 1 can adjust and recover the sealing performance between the coupling member 14 and the main pipe 12 and the sub tank 13. Further, in the fuel supply pipe 10 of Embodiment 1, the sub tank 13 can be attached to and detached from the main pipe 12.

### (Embodiment 2)

Hereinafter, a configuration of a supply pipe for vehicular gaseous fuel (hereinafter, referred to as a "fuel supply pipe 10A") of Embodiment 2 will be described with reference to Fig. 4. Although the injector attachment portion 15b and the attachment boss 15c are omitted in Fig. 4, the injector attachment portion 15b and the attachment boss 15c are formed in the main pipe 12 even in Embodiment 2 as in Embodiment 1.

In the fuel supply pipe 10A of Embodiment 2, the sub tank 13 separated from the main pipe 12 is formed in an elongated cylindrical shape, and as shown in Fig. 4, is disposed in a posture in which an axial direction O2 of the sub tank 13 is parallel to an axial direction O1 of the main pipe 12. The main pipe 12 and the sub tank 13 both extend in a direction coaxial with the cylinder arrangement of the engine E, and the axial directions O 1 and O2 are set in parallel. The sub tank 13 illustrated in Fig. 4 is set to have substantially the same pipe diameter as that of the main pipe 12 and to have substantially the same length as that of the main pipe 12. However, the pipe diameter and the length of the sub tank 13 can be optionally set based on the volume required for reducing the pulsation of the gaseous fuel and the layout requirements around the main pipe 12. In addition, the main pipe 12 and the sub tank 13 may be arranged in parallel in a plan view with respect to the cylinder arrangement direction of the engine E, and the axial directions O 1 and O2 may be parallel in a state where the positions in the vertical direction (height direction) of the vehicle coincide with each other. In addition, the main pipe 12 and the sub tank 13 may be arranged in parallel along the vertical direction (height direction) of the vehicle, and the axial directions O1 and O2 may be parallel in a state of extending in a direction coaxial with the cylinder arrangement of the engine E. Further, the main pipe 12 and the sub tank 13 may be arranged in parallel in a plan view with respect to the cylinder arrangement direction of the engine E, and the axial directions O1 and O2 may be parallel in a state where the positions in the vertical direction of the vehicle are shifted. Further, the main pipe 12 and the sub tank 13 may not necessarily extend in the same direction (for example, in a direction coaxial with the cylinder arrangement of the engine E) as long as those are disposed in a posture in which the axial direction O2 is parallel to the axial direction O1. That is, the axial directions O1 and O2 may be not necessarily parallel with each other.

As illustrated in Fig. 5, in the sub tank 13, both ends 13a and 13b in the longitudinal direction are closed, and two (a plurality of) tank-side opening portions 13c are formed in the peripheral surface.

On the other hand, as illustrated in Fig. 5, in the main pipe 12, both end portions 12a and 12b are closed, and two (a plurality of) pipe-side opening portions 12c are formed on the peripheral surface.

In the fuel supply pipe 10A of Embodiment 2, two (a plurality of) coupling members 14A are provided, and the main pipe 12 and the sub tank 13 are coupled with each other via the two (a plurality of) coupling members 14A. That is, the pipe-side opening portions 12c and the tank-side opening portions 13c formed two by two communicate with each other via the coupling member 14A, and the gaseous fuel flows between the main pipe 12 and the sub tank 13 via the two coupling members 14A.

Further, in the fuel supply pipe 10A of Embodiment 2, the coupling member 14A includes a metallic coupling pipe 17A whose both ends are opened, a first coupling portion 19a formed at one end of the coupling pipe 17A and coupled with the main pipe 12, and a second coupling portion 19b formed at the other end of the coupling pipe 17A and coupled with the sub tank 13. The coupling pipe 17A, the first coupling portion 19a, and the second coupling portion 19b are integrally molded.

The coupling pipe 17A of Embodiment 2 is a metal pipe with both ends opened, and is set to have substantially the same diameter as the main pipe 12 and the sub tank 13. As illustrated in Figs. 4 and 5, the coupling pipe 17A of Embodiment 2 extends linearly.

The first coupling portion 19a is a flange part formed at one end of the coupling pipe 17A, and is curved in an arc shape along the outer peripheral surface of the main pipe 12. In the coupling member 14A, the peripheral edge portion of the first coupling portion 19a is fixed to the main pipe 12 by brazing in a state where one end of the coupling pipe 17A faces the pipe-side opening portion 12c.

The second coupling portion 19b is a flange part formed at the other end of the coupling pipe 17A, and is curved in an arc shape along the outer peripheral surface of the sub tank 13. In the coupling member 14A, the peripheral edge portion of the second coupling portion 19b is fixed to the sub tank 13 by brazing in a state where the other end of the coupling pipe 17A faces the tank-side opening portion 13c.

Hereinafter, the operation in the fuel supply pipe 10A (a supply pipe for vehicular gaseous fuel) of Embodiment 2 will be described.

In the fuel supply pipe 10A of Embodiment 2, the sub tank 13 is formed in an elongated cylindrical shape, and is disposed in a posture in which the axial direction O2 of the sub tank 13 is parallel to the axial direction O1 of the main pipe 12.

As a result, in the fuel supply pipe 10A of Embodiment 2, the sub tank 13 can be appropriately disposed according to the gap around the main pipe 12. Therefore, although there is only a narrow gap around the main pipe 12, the fuel supply pipe 10A of Embodiment 2 can increase the volume of the part where the gaseous fuel flows to the injector 103 on the downstream side of the second supply pipe 10b. As a result, it is possible to obtain substantially the same effect as the increase in the volume of the main pipe 12, and to suppress the pressure pulsation of the gaseous fuel supplied to the injector 103.

In the fuel supply pipe 10A of Embodiment 2, two (a plurality of) coupling members 14A are provided, and the gaseous fuel flows between the main pipe 12 and the sub tank 13 via the two coupling members 14A. Therefore, the flow rate of the gaseous fuel flowing between the main pipe 12 and the sub tank 13 can be made larger than that of, for example, the fuel supply pipe 10A of Embodiment 1. As a result, it is possible to alleviate the rapid pressure fluctuation of the gaseous fuel and to prevent an opening operation of a relief valve (not shown) provided in the main pipe 12 for pressure resistance safety, for example.

Further, in the fuel supply pipe 10A of Embodiment 2, the coupling member 14A includes a metallic coupling pipe 17A whose both ends are opened, the first coupling portion 19a formed at one end of the coupling pipe 17A and coupled with the main pipe 12, and the second coupling portion 19b formed at the other end of the coupling pipe 17A and connected to the sub tank 13. The first coupling portion 19a is fixed to the main pipe 12 by brazing, and the second coupling portion 19b is fixed to the sub tank 13 by brazing.

Therefore, the fuel supply pipe 10A of Embodiment 2 can precisely join the coupling member 14 to the main pipe 12 and the sub tank 13. In the fuel supply pipe 10A of Embodiment 2, the first coupling portion 19a and the second coupling portion 19b can be fixed to the main pipe 12 and the sub tank 13 without damaging a base material.

Although the supply pipe for vehicular gaseous fuel of the present invention has been described based on Embodiment 1 and Embodiment 2, the specific configuration is not limited to these examples, and modifications, additions, and the like of the design are allowed without departing from the gist of the invention according to each claim of the claims.

Embodiment 1 describes an example in which the injector 103 is coupled with the main pipe 12 via the coupling pipe 103a, as a fuel supply system 100 to which the supply pipe for vehicular gaseous fuel of the present invention is applied. However, the coupling pipe 103a is not necessarily required, and the injector 103 may be directly inserted into and fixed to the injector attachment portion 15b formed in the main pipe 12 as illustrated in Fig. 6.

Further, in each of Embodiment 1 and Embodiment 2, an example in which the sub tank 13 is formed in an elongated cylindrical shape is described. However, in the supply pipe for vehicular gaseous fuel of the present invention, the shape of the sub tank 13 can be any shape that can optimally use the peripheral space of the main pipe 12.

Embodiment 1 describes an example in which both ends of the coupling pipe 17 of the coupling member 14 abut on the main pipe 12 or the sub tank 13, and are coupled by a screw structure (a fastening structure by the male screw portion 23 and the female screw portion 43). Furthermore, Embodiment 2 describes an example in which both the first coupling portion 19a and the second coupling portion 19b of the coupling member 14A are fixed to the main pipe 12 or the sub tank 13 by brazing. However, the main pipe 12, the sub tank 13, and the coupling member 14 may be coupled by another coupling method such as welding. Further, in the supply pipe for vehicular gaseous fuel of the present invention, one end portion of the coupling pipe 17 may be abutted against the main pipe 12 to be coupled by a screw structure using the first nut 18a, and the other end portion of the coupling pipe 17 may be fixed to the sub tank 13 by brazing. That is, the coupling member 14 may be coupled through a different coupling method between the main pipe 12 side and the sub tank 13 side.

In addition, Embodiment 1 and Embodiment 2 describe an example in which the inlet portion 15a and the injector attachment portion 15b are formed in the main pipe 12 and the main pipe 12 is a so-called fuel delivery pipe; but the supply pipe for vehicular gaseous fuel of the present invention is not limited thereto. In the main pipe 12, the inlet portion 15a and the injector attachment portion 15b are not necessarily formed, and only one of the inlet portion 15a and the injector attachment portion 15b may be formed. Further, the main pipe 12 may not be a fuel delivery pipe, and the main pipe 12 may be, for example, a first supply pipe 10a or a second supply pipe 10b.

In Embodiment 1, the first nut 18a and the second nut 18b are tightened to press the head portion 17a formed at the end portion of the coupling pipe 17, and the coupling pipe 17 is fixed to the first connection portion 16a or the second connection portion 16b. However, the coupling method for fixing the coupling pipe 17 to the main pipe 12 or the sub tank 13 by a screw structure is not limited thereto. For example, in the supply pipe for vehicular gaseous fuel of the present invention, a boss portion in which a female screw portion and an abutment portion are formed on an inner peripheral surface may be formed in the main pipe 12 and the sub tank 13, and male screw portions may be formed on outer peripheral surfaces of both end portions of the coupling pipe 17. In this case, by screwing the end portion of the coupling pipe 17 into the boss portion until the tip end of the coupling pipe 17 comes into contact with a bottom surface of the boss portion, the coupling pipe 17 is abutted against the main pipe 12 or the sub tank 13 and is fixed via the screw structure at the same time.

Furthermore, Embodiment 1 and Embodiment 2 describe an example in which the coupling pipes 17 and 17A of the coupling members 14 and 14A are tubes made of metal and having a fixed shape. However, the coupling pipes 17 and 17A may be flexible pipes that can be bent in a desired direction. As a result, the supply pipe for vehicular gaseous fuel of the present invention can change the arrangement position of the sub tank 13 in a state of being connected to the main pipe 12.

In Embodiment 1, the intermediate position of the coupling pipe 17 is bent at substantially a right angle, but the bending angle of the coupling pipe 17 is not limited to a right angle. The coupling pipe 17 can be bent at an angle appropriately adapted to the in-vehicle layout of the sub tank 13, and the intermediate position may not be bent.

In addition, Embodiment 2 describes an example in which the sub tank 13 is disposed in a posture in which the axial direction O2 of the sub tank 13 is parallel to the axial direction O1 of the main pipe 12, and the main pipe 12 and the sub tank 13 are coupled with each other by the plurality of coupling members 14A. However, in the supply pipe for vehicular gaseous fuel of the present invention, even when the sub tank 13 is disposed in a posture in which the axial direction O2 of the sub tank 13 is parallel to the axial direction O1 of the main pipe 12, the one end portion 12a of the main pipe 12 and the one end 13a of the sub tank 13 may be coupled with each other by the coupling member 14 as in Embodiment 1. Further, in the supply pipe for vehicular gaseous fuel of the present invention, the peripheral surface of the main pipe 12 and the peripheral surface of the sub tank 13 may be coupled with each other by one coupling member 14A.

Embodiment 1 and Embodiment 2 describe an example in which the both end portions 12a and 12b of the main pipe 12 are closed. However, in the main pipe 12, for example, a fuel pressure sensor may be disposed at an end portion, and the shapes of both end portions 12a and 12b are appropriately changed.

Further, in the supply pipe for vehicular gaseous fuel of the present invention, the sub tank 13 formed separately from the main pipe 12 and the coupling member 14 that couples the main pipe 12 with the sub tank 13 may constitute a sub-tank unit for the gaseous fuel supply pipe. By constituting the sub-tank unit with the sub tank 13 and the coupling member 14, a predetermined coupling member 14 can be provided in the sub tank 13 in advance. As a result, the supply pipe for vehicular gaseous fuel of the present invention can easily increase the volume of the portion where the gaseous fuel flows to the injector 103 on the downstream side of the second supply pipe 10b. In particular, by preparing a plurality of types of sub-tank units according to the specifications of the engine E, it is possible to easily cope with a difference in the specifications of the engine E.

### CROSS-REFERENCE TO RELATED APPLICATIONS

The present application claims priority based on Japanese Patent Application No. 2021-206494 filed with the Japan Patent Office on December 20, 2021, the entire disclosure of which is entirely incorporated herein by reference.

## Claims

1. A supply pipe for vehicular gaseous fuel comprising:
a main pipe through which gaseous fuel supplied to an internal combustion engine mounted on a vehicle flows;
a sub tank separated from the main pipe; and
a coupling member that couples the main pipe with the sub tank, wherein
the sub tank is coupled with the main pipe via the coupling member.

2. The supply pipe for vehicular gaseous fuel according to claim 1, wherein
the main pipe includes an inlet portion with which a supply pipe communicating with a fuel tank that stores the gaseous fuel is coupled, and an injector attachment portion to which an injector that injects the gaseous fuel into the internal combustion engine is connected, and
the coupling member is coupled with an end portion or a peripheral surface of the main pipe.

3. The supply pipe for vehicular gaseous fuel according to claim 1 or 2, wherein
the sub tank is formed in an elongated cylindrical shape, and
the coupling member couples one end portion of the main pipe with one end portion of the sub tank.

4. The supply pipe for vehicular gaseous fuel according to claim 1 or 2, wherein
the sub tank is formed in an elongated cylindrical shape, and is disposed in a posture in which an axial direction of the sub tank is parallel to an axial direction of the main pipe.

5. . The supply pipe for vehicular gaseous fuel according to claim 4, wherein
a plurality of the coupling members is provided, and
the gaseous fuel flows between the main pipe and the sub tank via a plurality of the coupling members.

6. The supply pipe for vehicular gaseous fuel according to any one of claims 1 to 5, wherein
the coupling member includes a metallic coupling pipe with both ends opened, and
at least one end portion of the coupling pipe is abutted against an abutment portion formed in the main pipe or the sub tank and is coupled with the main pipe or the sub tank via a screw structure.

7. The supply pipe for vehicular gaseous fuel according to any one of claims 1 to 5, wherein
the coupling member includes a metallic coupling pipe with both ends opened, a first coupling portion formed at one end of the coupling pipe and coupled with the main pipe, and a second coupling portion formed at the other end of the coupling pipe and coupled with the sub tank, and
at least one of the first coupling portion and the second coupling portion is fixed to the main pipe or the sub tank by brazing.

8. The supply pipe for vehicular gaseous fuel according to claim 6 or 7, wherein
the coupling pipe is bendable in a desired direction.
